# EUROPÄISCHE PATENTANMELDUNG

(11) **EP 2 075 121 A1**
(43) Veröffentlichungstag der Anmeldung: **01.07.2009**
(21) Anmeldenummer: 08021567.6
(22) Anmeldetag: 12.12.2008
(51) Int. Cl.: B32B 17/10, E06B 3/54, E04F 13/14, F16B 37/12

(54) **Verbesserte Platte aus Mehrschichtenglas, insbesondere aus Verbundsicherheitsglas, sowie Verfahren zum Fertigen derselben**

(30) Priorität: 19.12.2007 IT PD20070418
(71) Anmelder: fischerwerke GmbH & Co. KG, 72178 Waldachtal (DE)
(72) Erfinder: Fioraso, Massimo, 35127 Padova (IT)

(57) **Zusammenfassung**

Die vorliegende Erfindung betrifft eine verbesserte Platte (10) aus Mehrschichtenglas, insbesondere aus Verbundsicherheitsglas, umfassend zumindest zwei Scheiben (11a, 11b) mit einer Zwischenschicht (12) zum gegenseitigen Verbinden derselben.

Auf der Platte (10) ist dabei zumindest ein Bereich vorgesehen, der für die Verbindung mit einer Unterkonstruktion ausgerüstet ist und der einen Aufnahmesitz (13) für ein Element (14) zum Befestigen an der Unterkonstruktion enthält, das mit Mitteln zum Festhalten zumindest einer der Scheiben (11a, 11b) versehen ist.

Der Sitz (13) ist von einem ersten Loch (15), das durchgehend in einer ersten Scheibe (11a) ausgebildet ist und von einem zweiten Loch (16) definiert, das koaxial zu dem ersten Loch (15) ist und in einer zweiten Scheibe (11b) ausgebildet ist.

Die Zwischenschicht (12) sieht eine fest mit ihr verbundene Hülse (17) vor, die an das erste Loch (15) angepasst und innen mit diesem verbunden ist. Außerdem ist eine Büchse (19) vorgesehen, die koaxial in die Hülse (17) eingeführt ist, so dass sie fest mit dieser verbunden ist, und die mit einem Innengewinde versehen ist, wobei das Befestigungselement (14) einen Schaft (18) aufweist, der mit einem Außengewinde versehen ist, das zwecks Einschraubens in die Büchse (19) passend zu dem Innengewinde geformt ist.

## Beschreibung

Die Erfindung betrifft eine verbesserte Platte aus Mehrschichtenglas, insbesondere aus Verbundsicherheitsglas mit den Merkmalen des Oberbegriffs des Anspruchs 1 sowie ein Verfahren zum Fertigen derselben mit den Merkmalen des Oberbegriffs des Anspruchs 10.

Heute sind Sicherheitsplatten aus Glas bekannt, die im Wesentlichen zwei Scheiben umfassen, die mittels einer Zwischenschicht aus Kunststoff miteinander verbunden sind. Diese Arten von Platten verhindern dank ihrer Struktur, dass, falls die Scheiben zerbrechen, die Bruchstücke heraus fallen und Schaden an Personen oder Gegenständen verursachen und an der Öffnung, die sie verschlossen hatten, einen Durchgang hinterlassen. Es hält nämlich die Zwischenschicht die Bruchstücke an Ort und Stelle, indem es der Platte strukturelle Festigkeit verleiht, insbesondere wenn beide Scheiben zerbrochen sind. Sind die Scheiben jedoch zerbrochen, fehlt die Formfestigkeit der Platte, so dass sie verformbar wird. Wenn sich die Platte in den Bereichen verformt, die mit den Befestigungsmitteln in Eingriff stehen, die zum Stützen der Platte gedacht sind, ergibt sich eine Spannungskonzentration, die ein Nachgeben dieser Bereiche verursachen kann.

Eine bekannte Lösung zum Stützen dieser Art von Platten besteht darin, sie mittels als Zapfen ausgebildete Befestigungselemente an einer stützenden Unterkonstruktion zu befestigen. In diesem Fall hat die Platte Durchgangslöcher, in die ein Zapfen eingeführt ist, dessen eines Ende mit der stützenden Unterkonstruktion verbunden werden kann und der an seinem anderen Ende mit einem Kopf zum Halten der Platte versehen ist. Im Falle eines Bruchs beider Scheiben halten die Zapfen die Zwischenschicht und damit die Bruchstücke der Scheiben, über die Löcher, die die Zwischenschicht entsprechend den Löchern aufweist, die in den Scheiben zum Einführen der Zapfen ausgebildet sind. Eine derartige Konfiguration ist ungünstig wegen der Festigkeit derartiger Löcher, die dazu neigen zu reißen oder sich von dem Zapfen zu lösen, was dazu führt, dass die Platte nicht mehr gehalten ist.

Zudem ist eine Lösung bekannt, die derartige Nachteile beseitigt, indem sie eine Platte aus Mehrschichtenglas vorschlägt, die zumindest zwei Scheiben mit einer Zwischenschicht umfasst, das zum gegenseitigen Verbinden derselben geeignet ist. An der derartigen Platte sind Bereiche vorgesehen, die für das Verbinden mit einer Unterkonstruktion ausgerüstet sind. Diese Bereiche haben einen Aufnahmesitz für ein Befestigungselement zum Befestigen an der Unterkonstruktion, das mit Mitteln zum Festhalten zumindest einer der beiden Scheiben versehen ist. Der Aufnahmesitz ist von einem ersten Loch, das durchgehend in der ersten Scheibe ausgebildet ist, und von einem zweiten Loch definiert, das koaxial zu dem ersten Loch in der zweiten Scheibe ausgebildet ist. Gleichzeitig sieht die Zwischenschicht eine Hülse vor, die an das erste Loch angepasst und innen mit diesem verbunden ist, so dass es inwendig mit dem Befestigungselement in Eingriff gebracht werden kann. Im Allgemeinen hat das Befestigungselement ein Außengewinde, um sich in die Hülse einzuschrauben, die ihrerseits mit einem entsprechenden Innengewinde versehen ist. Diese Lösung erlaubt das Festhalten der Platte, auch wenn sie zerbrochen ist, durch die Stützwirkung des Zapfens, an dem die Hülse festgehalten ist.

Auch diese Lösung, die zwar gegenüber den vorhergehenden Lösungen vorteilhaft ist, kann weiter verbessert werden.

Die Aufgabe der vorliegen Erfindung ist es, eine verbesserte Platte aus Mehrschichtenglas anzugeben, die ein wirksameres Festhalten der Befestigungselemente in der Platte als die heute bekannten Vorrichtungen aufweist. Im Rahmen dieser Aufgabe besteht ein Ziel der Erfindung darin, eine Platte aus Mehrschichtenglas vorzuschlagen, die ebenso leicht an einer stützenden Unterkonstruktion zu befestigen ist, wie die heute bekannten mehrschichtigen Platten. Ein weiteres Ziel der Erfindung ist es, eine hinsichtlich ihrer Struktur einfache Platte aus Mehrschichtenglas vorzuschlagen, die zu relativ beschränkten Kosten hergestellt werden kann.

Diese Aufgabe sowie diese und andere Ziele, die im Folgenden deutlicher werden, werden von einer verbesserten Platte aus Mehrschichtenglas, insbesondere aus Verbundsicherheitsglas erreicht, umfassend zumindest zwei Scheiben mit einer Zwischenschicht zum gegenseitigen Verbinden der Scheiben, wobei auf der Platte zumindest ein Bereich vorgesehen ist, der für die Verbindung mit einer Unterkonstruktion ausgerüstet ist, wobei der Bereich einen Aufnahmesitz für ein Befestigungselement zum Befestigen an der Unterkonstruktion enthält, das mit Mitteln zum Befestigen zumindest einer der Scheiben versehen ist, wobei der Sitz von einem ersten Loch, das durchgehend in einer ersten Scheibe der zumindest zwei Scheiben ausgebildet ist, und von einem zweiten Loch definiert ist, das koaxial zu dem ersten Loch ist und in einer zweiten Scheibe der zumindest zwei Scheiben ausgebildet ist, wobei die Zwischenschicht eine fest mit ihr verbundene Hülse vorsieht, die an das erste Loch angepasst und innen mit diesem verbunden ist, dadurch gekennzeichnet, dass sie eine Büchse enthält, die koaxial in die Hülse eingeführt ist, so dass sie fest mit dieser verbunden ist, und die mit einem Innengewinde versehen ist, wobei das Befestigungselement einen Schaft hat, der mit einem Außengewinde versehen ist, das zwecks Einschraubens in die Büchse passend zu dem Innengewinde geformt ist.

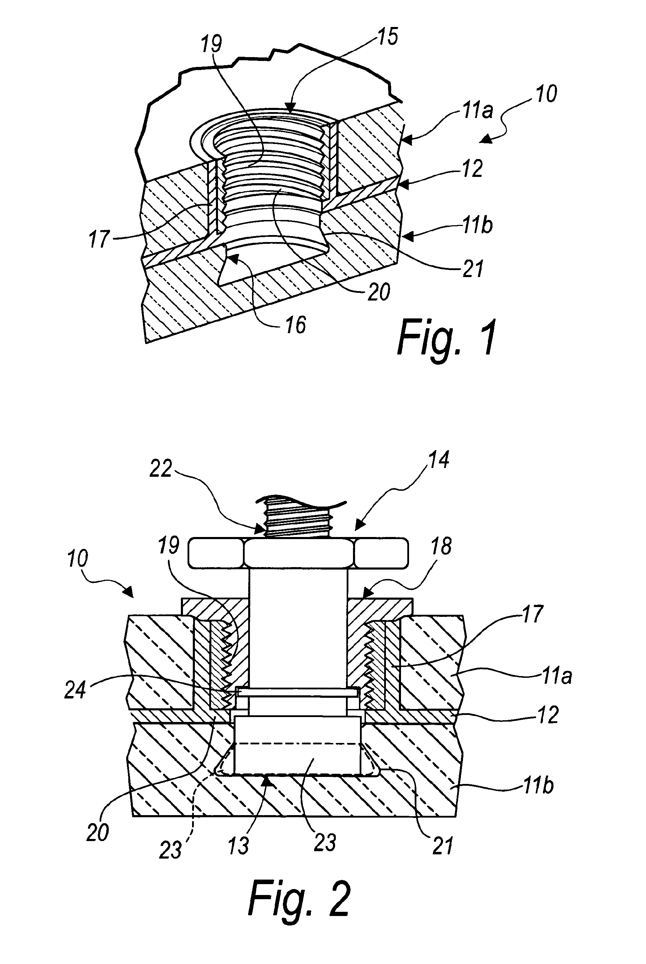

Weitere Eigenschaften und Vorteile der Erfindung ergeben sich größtenteils aus der Beschreibung eines bevorzugten, jedoch nicht ausschließlichen Ausführungsbeispiels der verbesserten Platte aus Mehrschichtenglas gemäß der Erfindung, das als nicht einschränkendes Beispiel in den beiliegenden Zeichnungen dargestellt ist, in denen
Figur 1 ein vergrößertes und geschnittenes Detail der erfindungsgemäßen Platte aus Mehrschichtenglas in perspektivischer Ansicht zeigt,
Figur 2 ein vergrößertes und geschnittenes Detail der erfindungsgemäßen Platte aus Mehrschichtenglas zeigt,
Figur 3 und Figur 4 Schritte zum Fertigen der erfindungsgemäßen Platte aus Mehrschichtenglas zeigen.

Unter Bezugnahme auf die Figuren bezeichnet das Bezugszeichen 10 insgesamt eine verbesserte Platte aus Mehrschichtenglas, insbesondere aus Verbundsicherheitsglas, die zumindest zwei Scheiben 11a und 11b mit einer Zwischenschicht 12 für ihre gegenseitige Befestigung umfasst. Auf der Platte 10 ist zumindest ein Bereich vorgesehen, der zum Verbinden mit einer Unterkonstruktion ausgerüstet ist. Dieser Bereich hat einen Aufnahmesitz 13 für ein Befestigungselement 14 zum Befestigen an der Unterkonstruktion, das mit Mitteln zum Befestigen zumindest einer der Scheiben 11a, 11b versehen ist. Der Sitz 13 ist von einem ersten Loch 15, das durchgehend in einer ersten Scheibe 11a der Scheiben 11a und 11b ausgebildet ist, und von einem zweiten Loch 16 definiert, das koaxial zu dem ersten Loch 15 in einer zweiten Scheibe 11b der Scheiben 11a und 11b ausgebildet ist. Außerdem sieht die Zwischenschicht 12 eine fest mit ihr verbundene Hülse 17 vor, die passend zu dem Loch 15 geformt und inwendig mit diesem verbunden ist.

Eine besondere Eigenschaft der erfindungsgemäßen Platte 10 besteht darin, dass sie eine Büchse 19 enthält, die koaxial in die Hülse 17 eingeführt ist, so dass sie fest mit dieser verbunden ist, und die mit einem Innengewinde versehen ist, wobei das Befestigungselement 14 einen Schaft 18 aufweist, der mit einem Außengewinde versehen ist, das zwecks Einschraubens in die Büchse 19 passend zu dem Innengewinde geformt ist.

Vorzugsweise weist die Hülse 17 an ihrem mit der zweiten Scheibe 11b verbundenen Ende einen ringförmigen Rand 20 auf, der nach innen vorspringend zwischen der zweiten Scheibe 11b und dem der zweiten Scheibe 11b zugewandten Ende der Büchse 19 angeordnet ist, um einen gegenseitigen Kontakt der Hülse 19 und der zweiten Scheibe 11b zu verhindern.

Vorzugsweise besteht die Büchse 19 aus metallischem Material, vorteilhafterweise aus rostfreiem Stahl. In einer alternativen Ausführungsform besteht die Büchse 19 zweckmäßigerweise aus Kunststoff, praktischerweise aus Nylon.

Die Zwischenschicht 12 besteht zweckmäßigerweise aus thermoplastischem Material, und die Hülse 17 ist aus dem gleichen thermoplastischen Material wie die Zwischenschicht 12 gebildet. Alternativ besteht die Zwischenschicht 12 vorteilhafterweise aus einem ersten thermoplastischen Material und die Hülse 17 ist aus einem zweiten thermoplastischen Material gebildet, das sich von dem ersten thermoplastischen Material unterscheidet, wobei das erste thermoplastische Material und das zweite thermoplastische Material zum Verbinden mittels Erwärmens geeignet sind.

Das zweite Loch 16 ist vorzugsweise ein Blindloch und hat an seinem blinden Ende einen Hinterschnitt 21, wobei das Befestigungselement 14 einen mit einem aufweitbaren Ende 23 versehenen Dübel 22 zum Eingreifen in den Hinterschnitt 21 enthält, der mit dem anderen Ende an einer Unterkonstruktion befestigbar ist.

Zweckmäßigerweise ist der Schaft 18 der Länge nach durchbohrt, und der Dübel ist durchgehend in den Schaft 18 eingesetzt und mit einem vorspringenden Umfangsring 24 versehen, der mit einer passend geformten inneren Stufe des Schafts 18 in Eingriff zu bringen ist, um das Lösen des Dübels 22 zu verhindern

Bei einem anderen, in den zugehörigen Figuren nicht dargestellten Ausführungsbeispiel ist eine kleine Hülse vorgesehen, in die der Dübel eingeführt ist und die mit einem vorspringenden Umfangsring versehen ist, der mit einer passend geformten inneren Stufe des Schafts in Eingriff zu bringen ist, um zu verhindern, dass sich der Dübel von diesem löst.

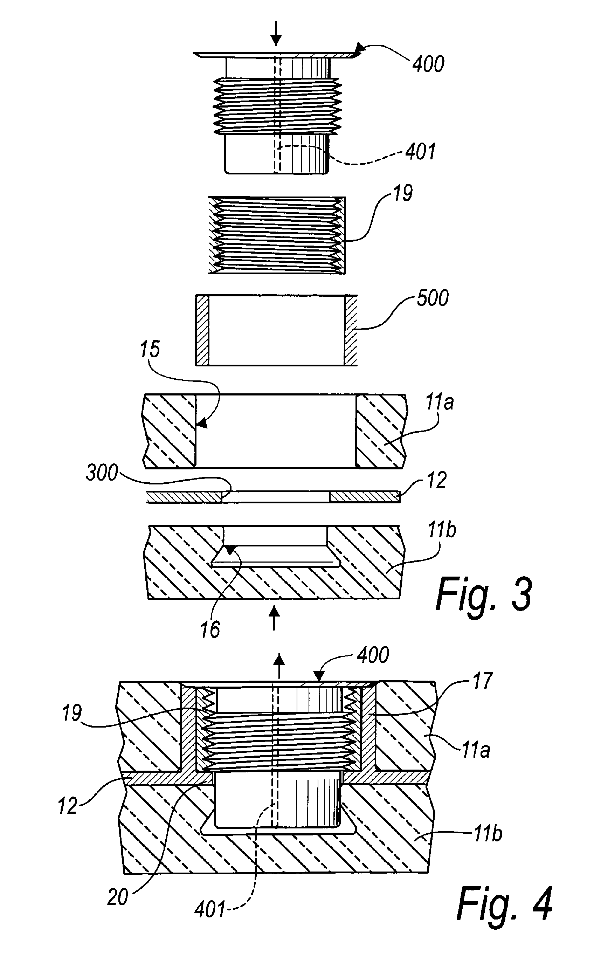

Unter besonderer Bezugnahme auf die Figuren 3 und 4 hat ein Verfahren zum Fertigen der verbesserten Platte 10 aus Mehrschichtenglas, umfassend
- einen ersten Schritt des Verbindens von zumindest zwei Scheiben 11a und 11b mit der Zwischenschicht 12, wobei der erste Schritt das Ausrichten des ersten Lochs 15 mit dem zweiten Loch 16 und mit einem in der Zwischenschicht 12 definierten dritten Loch 300 enthält,
- einen zweiten Schritt des Laminierens der Platte 10 aus Mehrschichtenglas, die besondere Eigenschaft, dass der erste Schritt umfasst:
   - einen Schritt des Aufschraubens der Büchse 19 auf einen mit einem Außengewinde versehenen Hilfszapfen 400,
   - einen Schritt des Einführens der Büchse 19 in eine Hülse 500 aus thermoplastischem Material, die passend zu dem ersten Loch 15 geformt ist,
   einen Schritt des Einsteckens des Hilfszapfens 400 in das zweite Loch 16, wobei die Hülse 500 in Umfangsrichtung dem zweiten Loch 15 inwendig zugewandt ist. Außerdem enthält der zweite Schritt das Bilden der Hülse 17 durch Verschmelzen des thermoplastischen Materials mit der Zwischenschicht 12.

Dieses Verfahren sieht vorteilhafterweise einen Schritt des Abschraubens des Hilfszapfens 400 von der Büchse 19 vor, der auf den zweiten Schritt folgt. Zweckmäßigerweise sieht der zweite Schritt des Laminierens das Ausstoßen der in dem Loch 16 vorhandenen Luft durch ein Ausstoßloch 401 vor, das durchgehend über den Hilfszapfen 400 vorgesehen ist.

Die Anwendung der erfindungsgemäßen Platte 10 aus Mehrschichtenglas ist folgende: Die Platte 10 aus Mehrschichtenglas wird mittels Dübeln 22 an der Unterkonstruktion befestigt, wobei die Dübel 22 in die Sitze 13 eingeführt werden und ihr aufweitbares Ende 23 jeweils aufgeweitet wird, so dass sie in den Hinterschnitt 21 eingreifen. Auf diese Weise halten, selbst wenn beide Scheiben 11a und 11b zerbrechen, die Dübel 22 die mit der Unterkonstruktion verbundene Scheibe, indem sie die Zwischenschicht 12 halten, die dank des Vorhandenseins der Hülse 19, in die der Dübel 22 eingeschraubt ist und die fest mit der Hülse 17 verbunden ist, sowohl das Lösen der Platte 10 von den Dübeln 22 als auch das Ausreißen der gebrochenen Platte 10 an dem betreffenden Loch verhindert, das hier als drittes Loch 300 bezeichnet ist.

In der Praxis hat man festgestellt, dass die Erfindung die Aufgabe löst und die vorgegebenen Ziele erreicht, indem eine verbesserte Platte aus Mehrschichtenglas, insbesondere aus Verbundsicherheitsglas, einen besseren Halt der Befestigungselemente an der Scheibe als die heute bekannten Vorrichtungen bietet. Zudem ist eine erfindungsgemäße Platte aus Mehrschichtenglas auf einfache und bequeme Weise an einer stützenden Unterkonstruktion zu befestigen.

Die so konzipierte Erfindung kann zahlreiche Modifikationen und Variationen erfahren, die alle im Rahmen des Erfindungskonzepts liegen. Zudem können alle Details durch andere, technisch gleichwertige Elemente ersetzt werden. In der Praxis sind die verwendeten Materialien, soweit sie mit der bestimmten Anwendung kompatibel sind, sowie die Abmessungen und Formen je nach den Anforderungen und dem Stand der Technik frei wählbar.

Wenn in einem Anspruch auf die genannten Merkmale und Techniken Bezugszeichen folgen, so wurden diese Bezugszeichen allein zum Zwecke der besseren Verständlichkeit der Ansprüche eingefügt und haben folglich keinerlei einschränkende Wirkung auf die Auslegung eines jeden durch derartige Bezugszeichen beispielhaft bezeichneten Elements.

## Patentansprüche

1. Verbesserte Platte aus Mehrschichtenglas, insbesondere aus Verbundsicherheitsglas, umfassend zumindest zwei Scheiben (11a, 11b) mit einer Zwischenschicht (12) zum gegenseitigen Verbinden der Scheiben (11a, 11b), wobei auf der Platte zumindest ein Bereich vorgesehen ist, der für die Verbindung mit einer Unterkonstruktion ausgerüstet ist, wobei der Bereich einen Aufnahmesitz (13) für ein Befestigungselement (14) zum Befestigen an der Unterkonstruktion enthält, das mit Mitteln zum Befestigen zumindest einer der Scheiben (11a, 11b) versehen ist, wobei der Sitz (13) von einem ersten Loch (15), das durchgehend in einer ersten Scheibe (11a) der zumindest zwei Scheiben (11a, 11b) ausgebildet ist, und von einem zweiten Loch (16) definiert ist, das koaxial zu dem ersten Loch (15) ist und in einer zweiten Scheibe (11b) der zumindest zwei Scheiben (11a, 11b) ausgebildet ist, wobei die Zwischenschicht (12) eine fest mit ihr verbundene Hülse (17) vorsieht, die an das erste Loch (15) angepasst und innen mit diesem verbunden ist, **dadurch gekennzeichnet, dass** sie eine Büchse (19) enthält, die koaxial in die Hülse (17) eingeführt ist, so dass sie fest mit dieser verbunden ist, und die mit einem Innengewinde versehen ist, wobei das Befestigungselement (14) einen Schaft (18) hat, der mit einem Außengewinde versehen ist, das zwecks Einschraubens in die Büchse (19) passend zu dem Innengewinde geformt ist.

2. Platte aus Mehrschichtenglas nach Anspruch 1, **dadurch gekennzeichnet, dass** die Hülse (17) an ihrem mit der zweiten Scheibe (11b) verbundenen Ende einen ringförmigen Rand (20) aufweist, der nach innen vorspringend zwischen der zweiten Scheibe (11b) und einem der zweiten Scheibe (11b) zugewandten Ende der Büchse (19) angeordnet ist, um ihren gegenseitigen Kontakt zu verhindern.

3. Platte aus Mehrschichtenglas nach einem oder mehreren der vorhergehenden Ansprüche, **dadurch gekennzeichnet, dass** die Büchse (19) aus metallischem Material besteht.

4. Platte aus Mehrschichtenglas nach einem oder mehreren der vorhergehenden Ansprüche, **dadurch gekennzeichnet, dass** das metallische Material rostfreier Stahl ist.

5. Platte aus Mehrschichtenglas nach einem oder mehreren der Ansprüche 1 und 2, **dadurch gekennzeichnet, dass** die Büchse (19) aus Kunststoff besteht.

6. Platte aus Mehrschichtenglas nach einem oder mehreren der Ansprüche 1 bis 5, **dadurch gekennzeichnet, dass** die Zwischenschicht (12) aus thermoplastischem Material besteht und die Hülse (17) aus dem gleichen thermoplastischen Material gebildet ist wie die Zwischenschicht (12).

7. Platte aus Mehrschichtenglas nach einem oder mehreren der Ansprüche 1 bis 5, **dadurch gekennzeichnet, dass** die Zwischenschicht (12) aus einem ersten thermoplastischen Material gebildet ist, und dass die Hülse (17) aus einem zweiten thermoplastischen Material gebildet ist, das sich von dem ersten thermoplastischen Material unterscheidet, wobei das erste thermoplastische Material und das zweite thermoplastische Material zum Verbinden durch Erwärmen geeignet sind.

8. Platte aus Mehrschichtenglas nach einem oder mehreren der vorhergehenden Ansprüche, **dadurch gekennzeichnet, dass** das zweite Loch (16) ein Blindloch ist und an seinem blinden Ende einen Hinterschnitt (21) aufweist, wobei das Befestigungselement (14) einen mit einem aufweitbaren Ende (23) versehenen Dübel (22) zum Eingreifen in den Hinterschnitt (21) enthält, der mit dem anderen Ende an einer Unterkonstruktion befestigbar ist, wobei der Schaft (18) der Länge nach durchbohrt ist und der Dübel (22) durchgehend in den Schaft (18) eingesetzt und mit einem vorspringenden Umfangsring (24) versehen ist, der mit einer passend geformten inneren Stufe des Schafts (18) in Eingriff zu bringen ist, um das Lösen des Schafts (18) vom Dübel (22) zu verhindern.

9. Platte aus Mehrschichtenglas nach einem oder mehreren der vorhergehenden Ansprüche, die sich durch das auszeichnet, was beschrieben und in den beigefügten Zeichnungsblättern dargestellt ist.

10. Verfahren zum Herstellen einer verbesserten Platte (10) aus Mehrschichtenglas, umfassend
- einen ersten Schritt des Verbindens der zumindest zwei Scheiben (11a, 11b) mit einer Zwischenschicht (12), wobei der erste Schritt das Ausrichten des ersten Loches (15) mit dem zweiten Loch (16) und mit einem in der Zwischenschicht (12) definierten dritten Loch (300) umfasst,
- einen zweiten Schritt des Laminierens der Platte aus Mehrschichtenglas,
**dadurch gekennzeichnet, dass** der erste Schritt enthält:
- einen Schritt des Aufschraubens der Büchse (19) auf einen mit einem Außengewinde versehenen Hilfszapfen (400),
- einen Schritt des Einführens der Büchse (19) in eine Hülse aus thermoplastischem Material, die passend zu dem ersten Loch (15) geformt ist,
- einen Schritt des Einsteckens des Hilfszapfens (400) in das zweite Loch (16), wobei die Hülse in Umfangsrichtung dem zweiten Loch (15) innen zugewandt ist,
wobei der zweite Schritt das Bilden der Hülse (17) durch Verschmelzen des thermoplastischen Materials mit der Zwischenschicht (12) enthält.

11. Verfahren nach Anspruch 10, das sich durch das auszeichnet, was beschrieben und in den beigefügten Zeichnungsblättern dargestellt ist.
